# FASCICULE DE BREVET EUROPEEN

(11) **EP 3 982 722 B1**
(45) Date de publication et mention de la délivrance du brevet: **09.08.2023**
(21) Numéro de dépôt: 20744089.2
(22) Date de dépôt: 02.06.2020
(51) Int. Cl.: A01M 1/20

(54) **DISPOSITIF D APPLICATION DE PRODUIT DE TRAITEMENT DE NIDS DE FRELONS**
ANWENDUNGSVORRICHTUNG FÜR BEHANDLUNGSPRODUKT FÜR HORNISSENNEST
APPLICATION DEVICE FOR TREATMENT PRODUCT FOR HORNITE NEST

(30) Priorité: 18.06.2019 FR 1906549
(43) Date de publication de la demande: 20.04.2022
(73) Titulaire: BOUISSOU, Pascal, 64400 Agnos (FR)
(72) Inventeur: BOUISSOU, Pascal, 64400 Agnos (FR)
(74) Mandataire: Touroude & Associates
(86) Numéro de dépôt international: PCT/FR2020/000181
(87) Numéro de publication internationale: WO 2020/254734

(56) Documents cités:
- CN-A- 108 902 085
- JP-A- 2017 104 063
- US-A- 4 534 128
- US-A1- 2003 053 846
- US-A1- 2013 026 400
- US-B1- 7 785 541

## Description

La présente invention concerne un outil professionnel de traitement de nids de frelons. Plus largement, l'invention s'adapte à tout traitement d'insectes de la famille hyménoptères ou autre. Plusieurs problèmes se posent pour le traitement de ces nids. 1 - Compte tenu de la dangerosité des insectes, le traitement est délégué à des professionnels qui connaissent bien le sujet Il peut s'agir de pompiers ou de sociétés privés. 2 - Le traitement nécessite l'usage de produits et ou de fumées qui sont souvent toxiques pour l'homme et pour la nature environnante.

Il est connu différents dispositifs qui sont peu adaptés. Les traitements existants sont à vrai dire rudimentaires et consistent en fait l'application massive de produits chimiques pulvérisés à la volée. Cela est la source de nombreux problèmes. 1 - les outils ne sont pas d'un niveau professionnel et sont souvent un bricolage amateur en dérivant d'autres ustensiles de leur fonction pour amener le produit sur le nid. Plus particulièrement les nids se nichent dans des endroits variés, souvent en hauteur, et souvent difficilement accessibles 2 - Cela représente un risque pour les professionnels qui peuvent être intoxiqués par le produit. 3 - cela représente clairement une destruction de l'environnement avec une destination du produit qui est mal ciblée et qui s'étend sur l'environnement proche.

L'état de la technique est décrit en US 2013/026400 A1, US 7 785 541 B1, US 2003/053846 A1, US 4 534 128 A, JP 2017 104063 A et CN 108 902 085 A. If

Un objet principal de l'invention est de proposer un applicateur de produits de traitement pour nid de frelons qui soit particulièrement pensé et dimensionné pour cet usage.

Un objet de l'invention est de proposer un applicateur qui soit un véritable outil professionnel qui garantisse la sécurité de l'opérateur.

Un objet de l'invention est de proposer un outil qui diminue au maximum l'impact destructeur sur l'environnement adjacent. L'invention visant à cibler très précisément le nid.

Un objet de l'invention est de proposer un applicateur qui limite l'usage de produit à la quantité strictement nécessaire. Trop souvent, les produits sont appliqués en quantité trop importante, ce qui représente un gâchis économique, une nuisance écologique et une contamination pour l'opérateur.

Un objet de l'invention est de proposer d'autres fonctions attachées 1 - d'ergonomie d'usage, de manipulation, d'accès au nid, avec une visibilité sur la qualité de l'intervention qui soit optimisée 2 - de géo localisation.

Dans un aspect principal, l'invention propose un dispositif d'application de produit de traitement pour nid de frelons en hauteur selon la revendication 1. Un applicateur utilise des dosettes de produit spécialement calibrées pour la fonction de destruction de nids selon leur dimension. L'applicateur comprend également un propulseur spécialement calibré pour la propulsion de produit à l'intérieur du nid. Enfin l'invention comprend également un diffuseur spécialement conçu et dimensionné pour délivrer le produit précisément à sa destination.

Dans un aspect l'invention propose des fonctions attachées de commande automatisées.

Dans un aspect, l'invention propose des fonctions de maintien et de manipulation en hauteur spécialement dimensionnées.

Dans un aspect, l'invention propose des fonctions de gestion de données, durée d'application, temps d'application, qualité de la capsule de produit, géo localisation.

Dans un aspect l'invention propose un système entièrement piloté manuellement, sans électronique avec une simple pompe qui est actionnée par l'utilisateur. Typiquement la pompe est une poire ou une pompe à piston. L'utilisateur en actionnant la pompe adresse du gaz sous pression dans la capsule. Typiquement la pompe est maintenue en bas de perche, et un flexible vient se rabouter au second étage qui est celui de la capsule.

L'invention sera mieux comprise à la lecture des figures annexées qui représentent un mode particulier de l'invention sur lesquelles :
[Fig1] représente un vue de principe de l'ensemble du dispositif
[Fig2] représente une vue de principe de la capsule de produit
[Fig3] représente une vue de principe de l'applicateur

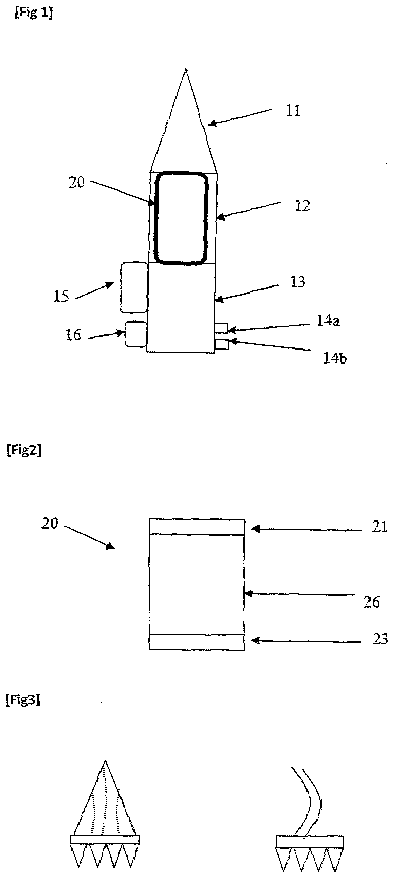

[Fig1] représente un vue de principe de l'ensemble du dispositif qui est en quelque sorte en forme de fusée et qui comprend trois étages. L'étage du bas, dit étage de propulsion avec un propulseur (13) qui est très rustique et est une simple pompe à air avec son fût cylindrique et son système d'admission d'air (14b) et sa soupape de sécurité (14b). Préférentiellement le gaz est comprimé à quelques bars seulement et il suffit de cette légère pression pour pulvériser le produit sous forme de poudre ou liquide. L'étage du milieu, est l'étage de charge qui comprend la capsule de produit 20) qui est logée dans un réservoir de maintien (12). Le réservoir de maintien (12) est dimensionné et pensé pour ce que lorsque la capsule est introduite et sécurisée en son sein alors et seulement elle est percée mécaniquement par l'action de serrage de la capsule dans son logement. Les principes mécaniques qui permettent ce perçage automatique peuvent être obtenus par différents moyens (vissage, serrage). L'étage du haut est l'étage d'application, avec un applicateur (11) perfectionné dont l'embout d'injection pénètre à même le nid. C'est le travail des professionnels de bien ausculter le nid de comprendre son approche et de définir l'introduction de l'embout de l'applicateur. Il existe, comme ultérieurement décrit plusieurs types d'embouts qui peuvent se fixer sur le réservoir de maintien afin de répondre au mieux à la demande concrète du cas rencontré par le professionnel lorsqu'il vient opérer sur site. En fixant l'applicateur, les embouts vont ouvrir l'opercule de (21) de la cartouche de produit, le produit pourra donc circuler à travers l'applicateur qui comporte un chemin de guidage creux qui amène le produit depuis l'ouverture de l'opercule jusque l'embout de sortie de l'applicateur. L'invention comporte fixée sur sa paroi externe une vanne intelligente (15) pilotée par une puce intelligente connectée à distance qui pilote un système automatisé d'ouverture / fermeture de vannes de gaz depuis le propulseur (13) pompe à air vers le réservoir de maintien (12). Ce dispositif est de type électrovanne. Il peut être un clapet. Sa fonction est d'ouvrir et de fermer la vanne d'air. L'invention comporte également sur son flanc des moyens de maintien (16) d'une perche. Ces moyens de maintien peuvent contenir une caméra vidéo. L'invention peut également favorablement être tenue par un drone. Le dispositif est donc fixé sur la perche, l'opérateur peut observer à distance le nid. Définir le chemin d'introduction de l'applicateur, une fois l'applicateur introduit, au moyen de sa télécommande il actionne l'ouverture de la vanne (15) qui par la propulsion de l'air comprimé, pousse le produit à travers l'applicateur (11) jusque dans le nid.

[Fig2] représente une vue de principe de la capsule de produit (20) qui comprend un fût (26) cylindrique, bouché en haut par un premier opercule (21) et en bas par un second opercule (23).

[Fig3] représente une vue de principe de l'applicateur qui peut prendre par exemple la forme extérieure d'un cône avec plusieurs trous de sortie, ou d'un simple tube. D'autres formes sont imaginables pour des applications particulières. L'ergonomie de l'applicateur dépend du type de nid à traiter. Le principe essentiel de l'applicateur est.de guider le produit de la meilleure des façons, sur et/ ou au sein du nid, pour pulvériser le produit.

La présente invention concerne donc un dispositif d'application de produit de traitement pour nid de frelons en hauteur, réalisé en trois étages successifs, caractérisé en ce qu'il comprend un premier étage avec un propulseur (13) alimenté par air comprimé, un second étage avec un réservoir de maintien (12) logeant une capsule de produit de traitement, un troisième étage avec un applicateur (11), un dispositif de vannes intelligentes (15) pilotées à distance pour libérer la pression du premier étage vers le second étage, la capsule étant percée en bas et en haut lors de l'enclenchement dans le réservoir de maintien, de façon à ce que l'ouverture des vannes intelligentes (15) propulse par pression de l'air comprimé, le produit contenu dans la capsule à travers l'applicateur vers sa sortie d'embout qui aura été positionnée précisément par l'opérateur au sein du nid à traiter.

La présente invention concerne donc un dispositif d'application de produit de traitement pour nid de frelons caractérisé en ce que la capsule de produit (20) comprend un fût (26) cylindrique, bouché en haut par un premier opercule (21) et en bas par un second opercule (23).

La présente invention concerne donc un dispositif d'application de produit de traitement pour nid de frelons caractérisé en ce que sur le flanc du dispositif sont solidarisés des moyens de maintien (16) d'une perche, et/ou de moyens vidéos.

La présente invention concerne donc un dispositif d'application de produit de traitement pour nid de frelons caractérisé en ce que l'applicateur adopte une forme de cône pointu percé sur ses flancs de sortie d'embout pour libérer le produit sous pression.

La présente invention concerne un dispositif d'application caractérisé en ce le premier étage est une pompe manuelle reliée au second étage par un flexible, l'utilisateur en actionnant la pompe qui est positionnée au premier étage, en bas de la perche, la perche maintient en haut au second étage la capsule, la vanne intelligente est une simple vanne actionnée par l'utilisateur directement sur la pompe.

On voit bien que de nombreuses variantes éventuellement susceptibles de se combiner peuvent ici être apportées sans jamais sortir du cadre de l'invention tel qu'il est défini ci-après.

## Revendications

1. Dispositif d'application de produit de traitement pour nid de frelons en hauteur, réalisé en trois étages successifs, **caractérisé en ce qu'**il comprend un premier étage avec un propulseur (13) alimenté par air comprimé, un second étage avec un réservoir de maintien (12) logeant une capsule de produit de traitement, un troisième étage avec un applicateur (11), un dispositif de vannes intelligentes (15) pilotées à distance pour libérer la pression du premier étage vers le second étage, la capsule étant percée en bas et en haut lors de l'enclenchement dans le réservoir de maintien, de façon à ce que l'ouverture des vannes intelligentes (15) propulse par pression de l'air comprimé, le produit contenu dans la capsule à travers l'applicateur vers sa sortie d'embout qui aura été positionnée précisément par l'opérateur au sein du nid à traiter.

2. Dispositif d'application de produit de traitement pour nid de frelons selon la revendication 1 **caractérisé en ce que** la capsule de produit (20) comprend un fût (26) cylindrique, bouché en haut par un premier opercule (21) et en bas par un second opercule (23).

3. Dispositif d'application de produit de traitement pour nid de frelons selon la revendication 1 **caractérisé en ce que** sur le flanc du dispositif sont solidarisés des moyens de maintien (16) d'une perche, et/ou de moyens vidéos.

4. Dispositif d'application de produit de traitement pour nid de frelons selon la revendication 1 **caractérisé en ce que** l'applicateur adopte une forme de cône pointu percé sur ses flancs de sortie d'embout pour libérer le produit sous pression.

## Patentansprüche

1. Vorrichtung zum Aufbringen eines Produkts zum Behandeln eines Hornissennests in der Höhe, die in drei aufeinanderfolgenden Stufen ausgeführt ist, **dadurch gekennzeichnet, dass** sie eine erste Stufe mit einem druckluftgespeisten Antrieb (13), eine zweite Stufe mit einem Haltebehälter (12), der eine Kapsel des Behandlungsprodukts aufnimmt, eine dritte Stufe mit einem Applikator (11), eine Vorrichtung mit intelligenten Ventilen (15), die ferngesteuert werden, um den Druck von der ersten Stufe in die zweite Stufe freizusetzen, umfasst, wobei die Kapsel bei dem Einrasten in den Haltebehälter unten und oben durchbohrt wird, so dass das Öffnen der intelligenten Ventile (15) durch den Druck von Druckluft das in der Kapsel enthaltene Produkt durch den Applikator zu seinem Mundstückauslass treibt, der durch den Bediener genau innerhalb des zu behandelnden Nests positioniert wurde.

2. Vorrichtung zum Aufbringen eines Produkts zum Behandeln eines Hornissennests nach Anspruch 1, **dadurch gekennzeichnet, dass** die Produktkapsel (20) einen zylindrischen Schaft (26) umfasst, der oben durch einen ersten Deckel (21) und unten durch einen zweiten Deckel (23) verschlossen ist.

3. Vorrichtung zum Aufbringen eines Produkts zum Behandeln eines Hornissennests nach Anspruch 1, **dadurch gekennzeichnet, dass** an der Flanke der Vorrichtung Halteeinrichtungen (16) für eine Stange und/oder Videoeinrichtungen fest verbunden sind.

4. Vorrichtung zum Aufbringen eines Produkts zum Behandeln eines Hornissennests nach Anspruch 1, **dadurch gekennzeichnet, dass** der Applikator die Form eines spitzen Kegels annimmt, der an seinen Mundstückauslassflanken durchbohrt ist, um das Produkt unter Druck freizusetzen.

## Claims

1. Device for applying a product for treating a hornets' nest at a height, produced in three successive stages, **characterized in that** it comprises a first stage that has a propellant (13) supplied with compressed air, a second stage that has a holding chamber (12) which accommodates a capsule of treatment product, a third stage that has an applicator (11), a smart-valve device (15), the valves of which are operated remotely so as to release the pressure from the first stage to the second stage, the capsule being pierced at the bottom and at the top when engaged in the holding chamber such that the opening of the smart valves (15), through the pressure of the compressed air, drives the product contained in the capsule through the applicator toward its nozzle outlet which will have been positioned precisely by the operator within the nest to be treated.

2. Device for applying a product for treating a hornets' nest according to claim 1, **characterized in that** the product capsule (20) comprises a cylindrical barrel (26) which is sealed at the top by a first lid (21) and at the bottom by a second lid (23).

3. Device for applying a product for treating a hornets' nest according to claim 1, **characterized in that** means (16) for holding a pole and/or video means are secured to the edge of the device.

4. Device for applying a product for treating a hornets' nest according to claim 1, **characterized in that** the applicator is in the form of a pointed cone having holes pierced in the edges of its nozzle outlet so as to release the pressurized product.
